# EUROPEAN PATENT APPLICATION

(11) **EP 4 811 061 A1**
(43) Date of publication of application: **23.09.2026**
(21) Application number: 25164124.7
(22) Date of filing: 17.03.2025
(51) Int. Cl.: G05B 23/02

(54) **DATA-EFFICIENT DETECTION OF NEW FAILURE TYPES IN MANUFACTURING**

(71) Applicant: Siemens Aktiengesellschaft, 80333 München (DE)
(72) Inventor: Gharieb, Mostafa, 11835 Neu-Kairo (EG); Thon, Ingo, 85630 Grasbrunn (DE); Wu, Zhiliang, 81379 München (DE)
(74) Representative: Siemens Patent Attorneys

(57) **Abstract**

The present disclosure provides a computer-implemented method for data-efficient detection of new failure types in manufacturing processes. The method includes defining a new failure type, labeling a minimal numbe2025000r of samples of the new failure type, and obtaining non-failure samples from a data pool without explicit labeling. Obtaining the non-failure samples comprises computing representations of the labeled samples, computing similarities between the representations of the labeled samples and representations of images in the image pool and selecting images from the image pool as non-failure samples based on the computed similarities. The method further includes fine-tuning a pre-trained model using the labeled samples of the new failure type, oversampling and the obtained non-failure samples to create a detection model for the new failure type.

## Description

### FIELD OF INVENTION

The present disclosure relates to failure detection in manufacturing processes, and more particularly to a method, system, and computer program product for data-efficient detection of new failure types in modern manufacturing processes using minimal labeled samples and pre-trained models.

### BACKGROUND

Modern manufacturing processes have become increasingly sophisticated, relying on advanced automation and quality control systems to produce high-quality products efficiently. These systems often employ artificial intelligence (Al) and machine learning techniques to detect defects and ensure product quality. As manufacturing techniques have improved, the overall failure rate in production has decreased significantly. However, the detection and classification of new, previously unseen failure types remains a challenging problem.

Al models, particularly deep learning approaches like convolutional neural networks (CNNs), have demonstrated excellent performance in many vision-based quality control applications when trained on large datasets. To address scenarios with limited data availability, various methods have been proposed to improve data efficiency, often leveraging transfer learning and fine-tuning of pre-trained models.

Modern manufacturing environments present unique challenges for building automated failure detection systems. Production lines are increasingly flexible, capable of producing a diverse range of products with varying specifications. This heterogeneity makes it difficult to collect and label comprehensive datasets for each product variant. Additionally, the low failure rates in advanced manufacturing processes mean that examples of newly identified defect types are often scarce. These factors combine to make the traditional approach of collecting and labeling large datasets for training Al models impractical in many cases.

Existing approaches to failure detection typically rely on either rule-based systems or data-driven machine learning models. Rule-based methods require manual development of specific criteria for each failure type, which can be time-consuming and may not generalize well to new scenarios. Data-driven approaches, while more flexible, traditionally require extensive labeled datasets to achieve high accuracy. Some few-shot learning techniques have been proposed to reduce the number of required samples, but these methods often still necessitate labeling both positive and negative examples for each new failure type.

Chen et al. in "Improved Few-Shot Visual Classification" represents a significant advancement in the field of few-shot learning, showcasing innovative approaches to enhance classification performance with limited labeled data. Their method combines pre-trained and meta-learned features, while also incorporating self-supervised learning techniques. Chen et al.'s work is broadly applied to visual classification tasks.

"On First-Order Meta-Learning Algorithms" by Nichol et al. introduces Reptile, a first-order gradient-based meta-learning algorithm that demonstrates impressive performance in few-shot learning tasks. Reptile does not require computing second-order derivatives, making it computationally less expensive than some other meta-learning approaches. The algorithm's ability to learn initialization parameters allows a rapid adaptation to new tasks.

It has been appreciated that a data-efficient failure detection system is needed that is applicable to different error detection methods, not only on visual inspection.

### SUMMARY

A new computer-implemented method is specified, comprising the features of claim 1.

Further a system, comprising the features of claim 10 and a computer program product according to claim 19 are defined.

This Summary is provided to introduce a selection of concepts in a simplified form that are further described below in the Detailed Description.

In a first aspect, a computer-implemented method for data-efficient detection of new failure types in manufacturing processes is provided. The method comprises: defining a new failure type; labeling a minimal number of samples of the new failure type; obtaining non-failure samples from a product database without explicit labeling, computing latent representations of the labeled samples, computing similarities between the representations of the labeled samples and latent representations of data in the product database, selecting data from the product database as non-failure samples based on the computed similarities; fine-tuning a pre-trained model using the labeled samples of the new failure type and the obtained non-failure samples to create a detection model for the new failure type, applying the detection model to data of products captured during the manufacturing process to identify instances of the new failure type; and adjusting the manufacturing process based on the identified instances of the new failure type to reduce occurrences of the failure.

This method enables efficient detection of new failure types in manufacturing processes with minimal labeling effort, reducing the time and resources required to adapt to new quality control challenges. A good strategy for determining the optimal number of non-failure samples would be to have the similar number of non-failure samples as failure samples. This helps to fine-tune a model with a balanced dataset.

The minimal number of samples may be at least two or three. By using such a small number of labeled samples, the method significantly reduces the manual effort required for data annotation, making it highly practical for manufacturing environments where time and resources are often limited.

The method may further comprise computing the representations of the labeled samples using a pre-trained neural network, for example a convolutional neural network for image modality, a recurrent neural network for time-series modality, etc

Utilizing a pre-trained convolutional neural network leverages transfer learning, allowing the method to benefit from features learned on large datasets and improving its ability to generalize from a small number of labeled samples.

The method may further comprise computing the similarities using L2 distance or cosine similarity. These similarity measures provide effective ways to compare the representations of labeled samples with those in the product database, enabling accurate selection of non-failure samples without explicit labeling.

The method may further comprise oversampling the obtained non-failure samples, which helps balance the dataset, improving the model's ability to distinguish between failure and non-failure cases, especially when dealing with imbalanced data common in manufacturing environments.

The method may further comprise reducing training weights of the oversampled non-failure samples.

Reducing the training weights of oversampled samples prevents the model from becoming biased towards the overrepresented class, maintaining a balanced learning process.

The product data may be image data stored in a Product Image Database.

Using image data allows the method to detect visual defects or anomalies in manufactured products, making it applicable to a wide range of quality control scenarios in manufacturing.

Alternatively, the product data may be time-series data from machines used during the manufacturing process of the product.

Utilizing time-series data enables the method to detect failures based on machine behavior patterns, expanding its applicability to process monitoring and predictive maintenance in manufacturing.

In a second aspect, a system for data-efficient detection of new failure types in manufacturing processes is provided. The system comprises: a storage device configured to store data and pre-trained models; a processor; and a memory storing instructions that, when executed by the processor, cause the system to: define a new failure type; label a minimal number of samples of the new failure type; obtain non-failure samples from a product database without explicit labeling by: computing representations of the labeled samples, computing similarities between the representations of the labeled samples and representations of product data in the database, selecting product data from the database as non-failure samples based on the computed similarities; fine-tune a pre-trained model using the labeled samples of the new failure type and the obtained non-failure samples to create a detection model for the new failure type; apply the detection model to data of products captured during the manufacturing process to identify instances of the new failure type; and output signals to adjust the manufacturing process based on the identified instances of the new failure type to reduce occurrences of the failure.

The trade-off between model accuracy and computational efficiency, especially in real-time manufacturing environment will be handled by selection of the pre-trained models.

This system provides a comprehensive hardware and software solution for implementing the data-efficient detection method, enabling seamless integration into existing manufacturing processes and quality control systems.

In a third aspect, a computer program product for data-efficient detection of new failure types in manufacturing processes is provided. The computer program product comprises a computer-readable storage medium having program instructions embodied therewith, the program instructions executable by a processor to cause the processor to perform a method comprising: defining a new failure type; labeling a minimal number of samples of the new failure type; obtaining non-failure samples from a database containing data without explicit labeling, comprising: computing representations of the labeled samples, computing similarities between the representations of the labeled samples and representations of data in the database, selecting data from the database as non-failure samples based on the computed similarities; fine-tuning a pre-trained model using the labeled samples of the new failure type and the obtained non-failure samples to create a detection model for the new failure type, applying the detection model to data of products captured during the manufacturing process to identify instances of the new failure type; and generating instructions to adjust the manufacturing process based on the identified instances of the new failure type to reduce occurrences of the failure.

This computer program product provides a software solution that can be easily deployed on existing computing infrastructure in manufacturing environments, enabling rapid implementation of the data-efficient failure detection method.

Further embodiments of the invention are indicated by the subclaims.

### BRIEF DESCRIPTION OF FIGURES

Embodiments of the invention will be described, by way of example, with reference to the following drawings, in which:
FIG. 1 illustrates a flowchart for building a detection system for a newly defined failure type, according to aspects of the present disclosure.
FIG. 2 depicts a sequence diagram of a training system for detecting new failure types in manufacturing processes, according to an embodiment.
FIG. 3 shows a flowchart for filtering non-x images in a manufacturing failure detection system, in accordance with example embodiments.
FIG. 4 illustrates a sequence diagram for a fine-tuning system with non-x filtering and over-sampling, according to aspects of the present disclosure.

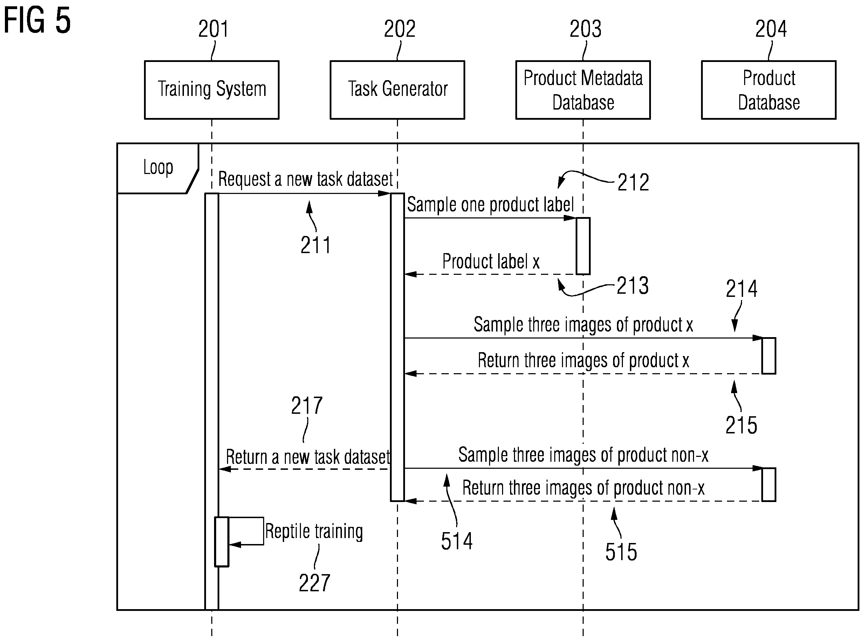

FIG. 5 depicts a sequence diagram of a training system for product failure detection, according to the state of the art.

Common reference numerals are used throughout the figures to indicate similar features.

### DETAILED DESCRIPTION

The present disclosure relates to data-efficient detection of new failure types in manufacturing processes. Modern manufacturing environments face challenges in identifying and adapting to newly defined failure types while minimizing the need for extensive data labeling. This disclosure presents solutions for efficiently detecting new failure types using minimal labeled data samples.

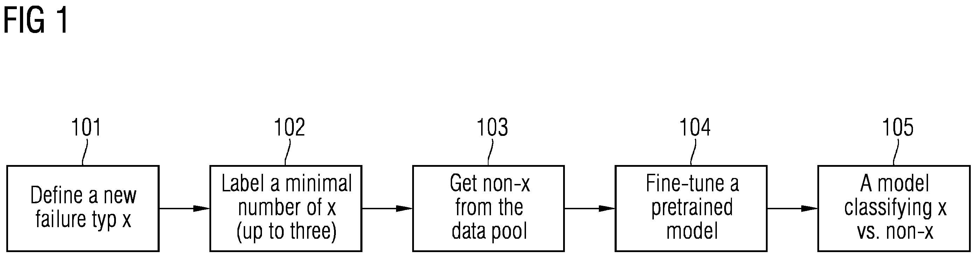

A computer-implemented method is provided for data-efficient detection of new failure types in manufacturing processes. The method leverages existing data and pre-trained models to rapidly adapt to newly defined failure types with minimal manual labeling effort. This approach enables manufacturing systems to quickly respond to emerging quality control issues. FIG. 1 illustrates a flowchart for a method of detecting new failure types in manufacturing processes. The method comprises a sequence of steps designed to efficiently train a model with minimal labeled data.

The method begins with step 101, where a new failure type x is defined. This step involves identifying and characterizing a new type of failure that the system aims to detect.

Following the definition of the new failure type, the process moves to step 102 where a minimal number of samples of the new failure type x are labeled. The flowchart specifies that this number is up to three samples, indicating a data-efficient approach.

The method then proceeds to step 103, which involves obtaining non-x samples from the data pool. This step is crucial for creating a diverse dataset without requiring extensive manual labeling of non-failure samples. The data can consist of images or other manufacturing-related information such as time-series data.

Step 104 involves fine-tuning a pre-trained model. This step utilizes the labeled samples of the new failure type x and the obtained non-x samples to adapt an existing model for the specific task of detecting the new failure type.

During the final step 105 in the method, the fine-tuned model is used to classify x vs. non-x samples. This step represents the deployment of the trained model to distinguish between the new failure type and non-failure samples.

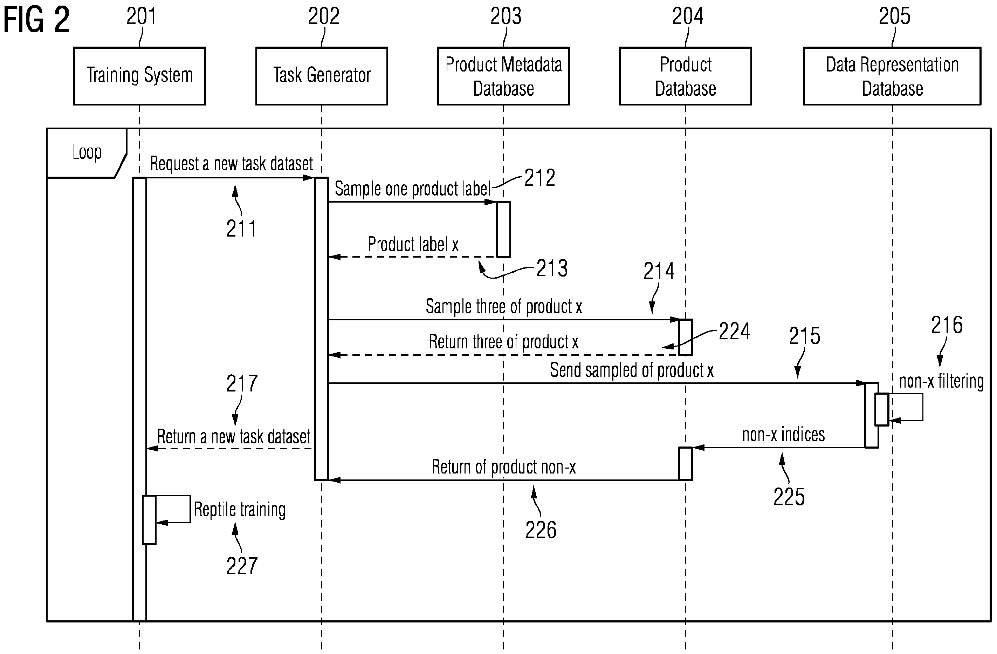

FIG. 2 illustrates a block diagram of a training system for detecting new failure types in manufacturing processes. The system comprises several interconnected components that work together to efficiently train a model with minimal pre-labeled data.

A system for data-efficient detection of new failure types in manufacturing processes is also disclosed. The system includes a storage device configured to store data and pre-trained models, a processor, and a memory storing instructions. When executed by the processor, these instructions enable the system to perform the data-efficient detection method.

Additionally, a computer program product for data-efficient detection of new failure types in manufacturing processes is provided. The computer program product comprises a computer-readable storage medium having program instructions embodied therewith. These instructions, when executed by a processor, cause the processor to perform the data-efficient detection method.

The disclosed method, system, and computer program product offer a novel approach to addressing the challenges of detecting new failure types in dynamic manufacturing environments. By minimizing the need for extensive data labeling while maintaining detection accuracy, these solutions can significantly improve the efficiency and adaptability of quality control processes in modern manufacturing settings.

The system architecture for data-efficient detection of new failure types in manufacturing processes comprises several interconnected components, as illustrated in FIG. 2.

The system comprises the following main components:
Training System 201: Initiates the training process and performs model fine-tuning.

Task Generator 202: Manages the creation of task datasets for training.

Product Metadata Database 203: Stores information about product labels and types.

Product Database 204: Contains data of manufactured products, e.g. images of the product or time data of the manufacturing process data.

Data Representation Database 205: Stores latent representations of product data, e.g. images.

As shown in FIG. 2, the Training System 201 interacts with the Task Generator 202 to request new task datasets. The Task Generator 202 then samples product labels from the Product Metadata Database 203 and retrieves corresponding images from the Product Image Database 204. The Data Representation Database 205 is utilized for non-x filtering, which helps in selecting appropriate non-failure samples without explicit labeling.

The system includes a storage device configured to store data and pre-trained models. A processor executes instructions stored in a memory to perform the data-efficient detection of new failure types. These instructions enable the system to define new failure types, label a minimal number of samples, obtain non-failure samples, and fine-tune pre-trained models.

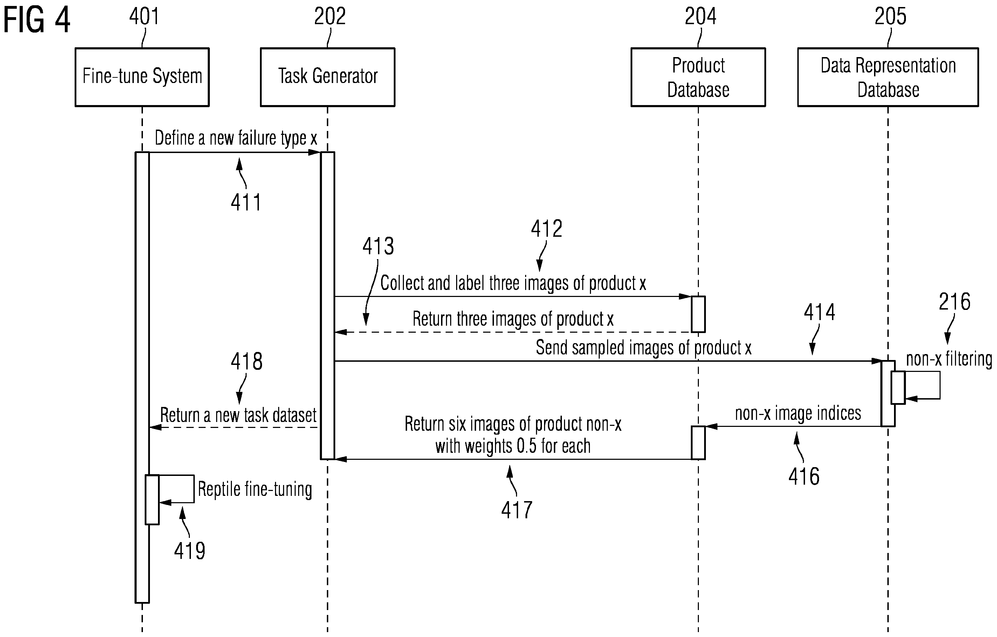

FIG. 4 illustrates how the system components interact during the fine-tuning process. A Fine-tune System 401 defines a new failure type and initiates the collection of labeled samples 411. The Task Generator 202 then retrieves images from the Product Database 204 and performs non-x filtering using the Data Representation Database 205.

The system is designed to iteratively repeat the steps of task generation, sample selection, and model fine-tuning to continuously improve model performance. This iterative process allows the system to adapt to new failure types and refine its detection capabilities over time, enhancing the overall efficiency of failure detection in manufacturing processes.

The process of defining and labeling new failure types in manufacturing processes is a critical step in the data-efficient detection method. FIG. 1 illustrates this process, which begins with defining a new failure type.

Defining a new failure type involves identifying and characterizing a previously unrecognized or newly emerging defect in the manufacturing process. This may be based on observations from quality control inspections, customer feedback, or analysis of production data. For example, in a semiconductor manufacturing process, a new failure type might be an unexpected pattern of discoloration on silicon wafers that was not previously categorized.

Once a new failure type is defined, the next step is to label a minimal number of samples of this new failure type. The method is designed to be highly efficient, requiring only a small number of labeled samples to initiate the detection process. Specifically, the minimal number of samples is three or fewer. This approach significantly reduces the time and resources required for data labeling compared to traditional methods that may require hundreds or thousands of labeled samples.

In practice, labeling these samples involves selecting representative examples of the newly defined failure type from the production line or existing product database. For instance, if the new failure type is a specific type of surface defect on a manufactured part, quality control personnel would identify and label up to three images or data points that clearly exhibit this defect.

The labeling process may involve annotating images, in the case of the semiconductor wafer discoloration, an engineer might select three wafer images showing the new discoloration pattern and label them as instances of the new failure type.

By limiting the number of manually labeled samples to three or fewer, the method allows for rapid adaptation to new failure types while minimizing the manual effort required. This approach is particularly valuable in dynamic manufacturing environments where new types of defects may emerge frequently due to changes in processes, materials, or equipment.

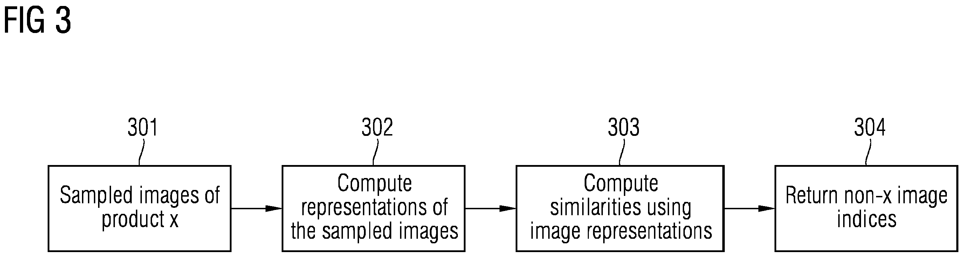

The method for obtaining non-failure samples from a product database without explicit labeling involves several steps, as illustrated in FIG. 3. This process is designed to efficiently identify samples that are dissimilar to the labeled failure samples, thereby providing a diverse set of non-failure examples for training the detection model.

The product database may contain various types of data related to the manufacturing process. In some examples, the product data consists of images stored in a product image database 204. These images may represent different stages of the manufacturing process or final product inspections. In other examples, the product data consists of time-series data from machines used during the manufacturing process of the product. This time-series data may include sensor readings, temperature logs, pressure measurements, or other relevant parameters collected throughout the production cycle.

The process depicted in Fig. 3 begins with computing latent representations of the labeled samples 302. For image data, these representations may be computed using a pre-trained convolutional neural network. For time series data for example, computation of the representation may use recurrent neural networks.

The pre-trained network serves as a feature extractor, transforming the raw image data into a compact, high-dimensional representation that captures relevant features for failure detection.

In cases where the product data consists of time-series data, recurrent neural networks may be used instead of convolutional neural networks to compute the latent representations. Recurrent neural networks are particularly well-suited for processing sequential data, allowing the system to capture temporal dependencies and patterns in the manufacturing process data.

To enhance the robustness of the representations, self-supervised learning techniques such as SimCLR (Simple Framework for Contrastive Learning of Visual Representations) may be employed. These techniques allow the system to learn meaningful representations from unlabeled data, which can be particularly valuable in manufacturing settings where labeled data may be scarce.

In some examples, the method combines different types of latent representations. For instance, representations derived from image data may be combined with those from time-series data to provide a more comprehensive view of the manufacturing process and potential failure modes.

Once the latent representations are computed, the next step involves computing similarities between the representations of the labeled samples and the latent representations of data in the product database, 303. This similarity computation may use various metrics, including L2 distance or cosine similarity. The choice of similarity metric may depend on the specific characteristics of the data and the nature of the failure types being detected.

Based on the computed similarities, the method selects data from the product database as non-failure samples, 304 (Return non-x image indices). Samples that are sufficiently dissimilar to the labeled failure samples are chosen as representative non-failure examples. This selection process allows the system to identify a diverse set of non-failure samples without requiring explicit labeling of the entire database.

The non-failure sample selection process is designed to be flexible and adaptable to different types of manufacturing data. Whether working with image data from a product image database or time-series data from production machines, the method provides a consistent approach for identifying relevant non-failure samples to support the training of robust failure detection models.

The fine-tuning process of the pre-trained model involves using the labeled samples of the new failure type and the obtained non-failure samples to create a detection model for the new failure type. This process is designed to efficiently adapt the pre-trained model to recognize the newly defined failure type while maintaining its ability to distinguish between failure and non-failure samples.

As illustrated in FIG. 4, the fine-tuning process begins after the system has collected and labeled a minimal number of samples of the new failure type and obtained non-failure samples through the non-x filtering process 418. The Fine-tune System initiates the fine-tuning process using these samples.

To enhance the robustness of the fine-tuning process, the system employs an oversampling technique for the obtained non-failure samples. This oversampling helps to address potential class imbalance issues that may arise due to the limited number of labeled failure samples. In some examples, the non-failure samples are oversampled by a factor of three, effectively tripling the number of non-failure samples used in the fine-tuning process.

To compensate for the oversampling of non-failure samples, the system reduces the training weights of these oversampled samples. This weight reduction helps to maintain a balanced influence between the failure and non-failure samples during the fine-tuning process. In some examples, the training weights of the oversampled non-failure samples are reduced to one-third of their original values, corresponding to the oversampling factor.

The pre-trained model used in this process may be initially trained using a meta-learning algorithm. Meta-learning algorithms are designed to create models that can quickly adapt to new tasks with minimal additional training data. One such meta-learning algorithm used in this context is the Reptile algorithm.

The Reptile algorithm is particularly well-suited for the fine-tuning process in failure detection scenarios. Reptile is designed to learn a good initialization for the model parameters, allowing for rapid adaptation to new tasks with only a few gradient steps. This characteristic aligns well with the goal of efficiently detecting new failure types using minimal labeled data. Other meta-learning algorithms, such as MAML (Model-Agnostic Meta-Learning for Fast Adaptation of Deep Networks, and any algorithm following a similar paradigm are also suitable.

During the fine-tuning process 419, the system applies the Reptile algorithm to update the pre-trained model's parameters using the labeled failure samples and the weighted, oversampled non-failure samples. This process allows the model to quickly adapt to the new failure type while maintaining its ability to generalize across different types of failures and non-failure cases.

The fine-tuning process may be performed iteratively, with multiple rounds of Reptile updates to progressively refine the model's performance on the new failure detection task. The number of iterations may be determined based on factors such as the complexity of the new failure type, the diversity of the non-failure samples, and the desired level of detection accuracy.

By combining oversampling, weight adjustment, and meta-learning techniques, the fine-tuning process enables the creation of a detection model that can effectively identify instances of the new failure type while maintaining robust performance on previously learned failure detection tasks.

After fine-tuning the detection model for the new failure type, the model is applied to data of products captured during the manufacturing process. This application involves continuously monitoring and analyzing product data as it is generated in real-time during production.

For image-based detection, the model processes images of products at various stages of manufacturing. These images may be captured by cameras installed at key points along the production line. The detection model analyzes each image to identify potential instances of the newly defined failure type.

In cases where the product data consists of time-series data from manufacturing equipment, the model processes streams of sensor readings, temperature logs, pressure measurements, or other relevant parameters. The detection model analyzes these data streams to identify patterns or anomalies that may indicate the presence of the new failure type.

When the detection model identifies an instance of the new failure type, an alert may be generated. This alert can be in the form of a visual notification on a monitoring dashboard, an automated email to quality control personnel, or an entry in a production log system.

Based on the identified instances of the new failure type, adjustments are made to the manufacturing process to reduce occurrences of the failure. These adjustments may involve various aspects of the production process, depending on the nature of the detected failure.

For example, if the new failure type is related to a specific manufacturing step, parameters of that step may be adjusted. This could include modifying temperature settings, adjusting processing times, or fine-tuning equipment calibration.

In cases where the failure is linked to raw material quality, the adjustment may involve implementing additional quality checks on incoming materials or changing material suppliers.

If the failure is associated with equipment wear or malfunction, the adjustment may include scheduling more frequent maintenance checks or replacing specific components.

The manufacturing process adjustments are typically implemented in a controlled manner, with changes being introduced gradually and their effects closely monitored. This approach allows for validation of the adjustments and ensures that they effectively reduce the occurrences of the new failure type without introducing unintended consequences.

The detection model and process adjustment system may operate in a feedback loop, continuously monitoring the effects of adjustments on failure rates. This ongoing monitoring allows for further refinement of the manufacturing process over time, potentially leading to continuous improvement in product quality and reduction of failure occurrences.

The system integration and workflow for data-efficient detection of new failure types in manufacturing processes combines various components and steps to create a robust and adaptive solution. FIG. 4 illustrates the sequence of interactions between the key components of the system, showcasing how they work together to achieve efficient failure detection with minimal labeled data.

The workflow begins with the Fine-tune System 401 defining a new failure type 411. This step involves identifying and characterizing a previously unrecognized or newly emerging defect in the manufacturing process. Once the new failure type is defined, the Task Generator 202 collects and labels a minimal number of samples, 412 typically three, of the newly defined failure type from the Product Database 204.

After obtaining the labeled samples, the Task Generator 202 sends these samples to the Representation Database 205 for non-x filtering 414. This step is crucial for identifying potential non-failure samples without the need for explicit labeling of the entire dataset. The Data Representation Database 205 performs the filtering process 216 and returns 416 non-x image indices to the Task Generator.

Using these indices, the Task Generator retrieves a set of images representing non-failure samples from the Product Image Database. In the example shown in FIG. 4, six images of non-failure products are retrieved, each assigned a weight of 0.5, 417. This weighting mechanism helps balance the influence of failure and non-failure samples during the subsequent training process.

The Task Generator 202 then compiles a new task dataset, combining the labeled failure samples and the weighted non-failure samples. This dataset 418 is returned to the Fine-tune System 401, which uses it to perform Reptile fine-tuning 419 on a pre-trained model. The Reptile algorithm allows for rapid adaptation of the model to the new failure type while maintaining its ability to generalize across different types of failures.

The integrated workflow allows for continuous improvement of the failure detection system. As new failure types are identified, the system can quickly adapt by repeating the process of minimal labeling, non-failure sample selection, and model fine-tuning. This iterative approach enables the manufacturing process to stay responsive to emerging quality control issues with minimal disruption and resource investment.

By leveraging existing data and pre-trained models, the system reduces the need for extensive manual labeling while maintaining high detection accuracy. This efficiency is particularly valuable in dynamic manufacturing environments where new types of defects may emerge frequently due to changes in processes, materials, or equipment.

The workflow also supports the integration of different data types, such as image data and time-series data from manufacturing equipment. This flexibility allows the system to be applied across various manufacturing scenarios, from visual inspection tasks to analysis of sensor data from production machinery.

Overall, the integrated system and workflow provide a comprehensive solution for data-efficient detection of new failure types in manufacturing processes. The approach combines minimal labeling requirements, intelligent sample selection, and adaptive model fine-tuning to create a robust and responsive quality control system that can quickly adapt to new challenges in the manufacturing environment.

### LIST OF REFERENCE LABELS

- 101 -: Define new failure type x
- 102 -: Label minimal number of x samples (up to three)
- 103 -: Get non-x samples from data pool
- 104 -: Fine-tune a pre-trained model
- 105 -: Model classifies x vs non-x
- 201 -: Training System
- 202 -: Task Generator
- 203 -: Product Metadata Database
- 204 -: Product Database
- 205 -: Data Representation Database
- 211 -: Request a new task dataset
- 212 -: Sample one product label
- 213 -: Return product label x
- 214 -: Sample three images of product x
- 215 -: Send Sample images of product x
- 216 -: Non-x filtering
- 217 -: Return new task dataset
- 224 -: Return three images of product x
- 225 -: Return non-x image indices
- 227 -: Reptile training
- 301 -: Sampled images of product x
- 302 -: Compute representations of the sampled images
- 303 -: Compute similarities using image representations
- 304 -: Return non-x image indices
- 401 -: Fine-tune System
- 411 -: Define a new failure type x
- 412 -: Collect and label three images of product x
- 413 -: Return three images of product x
- 414 -: Sampled images of product x
- 415 -: non-x filtering
- 416 -: non-x image indices
- 417 -: Return six images of product non-x with weights 0.5 for each
- 418 -: Return new task dataset

- 419 -: Reptile fine-tuning
- 514 -: Sample three images of product non-x
- 515 -: Return three images of product non-x

## Claims

1. A computer-implemented method for data-efficient detection of new failure types in manufacturing processes, the method comprising:
defining a new failure type (101);
labeling a minimal number of samples of the new failure type (102);
obtaining non-failure samples from a product database (204) without explicit labeling,
comprising:
computing latent representations of the labeled samples (302);
computing similarities between the representations of the labeled samples (303) and latent representations of data in the product database (204);
selecting data from the product database (204) as non-failure samples based on the computed similarities; and
fine-tuning a pre-trained model (104) using the labeled samples of the new failure type and the obtained non-failure samples to create a detection model for the new failure type,
applying the detection model to data of products captured during the manufacturing process to identify instances of the new failure type; and
adjusting the manufacturing process based on the identified instances of the new failure type to reduce occurrences of the failure.

2. The computer-implemented method of claim 1, wherein the minimal number of samples is three or fewer.

3. The computer-implemented method of claim 1 or 2, wherein computing the representations of the labeled samples comprises using a pre-trained neural network.

4. The computer-implemented method of any of claims 1 to 3, wherein computing the similarities comprises using L2 distance or cosine similarity.

5. The computer-implemented method of any preceding claim, further comprising oversampling the obtained non-failure samples.

6. The computer-implemented method of claim 5, further comprising reducing training weights of the oversampled non-failure samples.

7. The computer-implemented method of any preceding claim, wherein the pre-trained model is trained using a meta-learning algorithm.

8. The computer-implemented method of any preceding claim, wherein the product data is image data stored in a Product Image Database (204).

9. The computer-implemented method of any of claims 1 to 7, wherein the product data is time-series data from machines used during the manufacturing process of the product.

10. A system for data-efficient detection of new failure types in manufacturing processes, the system comprising:
a storage device configured to store data and pre-trained models;
a processor; and
a memory storing instructions that, when executed by the processor, cause the system to:
define a new failure type (101);
label a minimal number of samples of the new failure type (102);
obtain non-failure samples from a product database without explicit labeling (103) by: computing representations of the labeled samples (302);
computing similarities between the representations of the labeled samples and representations of product data in the database (303);
selecting product data from the database as non-failure samples based on the computed similarities (304); and
fine-tune a pre-trained model using the labeled samples of the new failure type and the obtained non-failure samples to create a detection model for the new failure type (104)
apply the detection model to data of products captured during the manufacturing process to identify instances of the new failure type; and
output signals to adjust the manufacturing process based on the identified instances of the new failure type to reduce occurrences of the failure.

11. The system of claim 10, wherein the minimal number of samples is three or fewer.

12. The system of claim 10 or 11, wherein the instructions to compute the representations of the labeled samples comprise instructions to use a pre-trained neural network.

13. The system of any of claims 10 to 12, wherein the instructions to compute the similarities comprise instructions to use L2 distance or cosine similarity.

14. The system of any of claims 10 to 13, wherein the instructions further cause the system to oversample the obtained non-failure samples.

15. The system of claim 14, wherein the instructions further cause the system to reduce training weights of the oversampled non-failure samples.

16. The system of any of claims 10 to 15, wherein the pre-trained model is trained using a meta-learning algorithm.

17. The system of any of claims 10 to 16, wherein the instructions further cause the system to iteratively repeat the steps to continuously improve model performance.

18. The system of any of claims 10 to 17, wherein the product data consists of images and is stored in the storage device as a product image database (204).

19. The system of any of claims 10 to 18, wherein the product data consists of product data is time-series data from machines used during the manufacturing process of the product.,

20. A computer program product for data-efficient detection of new failure types in manufacturing processes, the computer program product comprising a computer-readable storage medium having program instructions embodied therewith, the program instructions executable by a processor to cause the processor to perform a method comprising:
defining a new failure type (101);
labeling a minimal number of samples of the new failure type (102);
obtaining non-failure samples from a database containing data without explicit labeling (103),
comprising:
computing representations of the labeled samples (302);
computing similarities between the representations of the labeled samples and representations of data in the database (303);
selecting data from the database as non-failure samples based on the computed similarities (304); and
fine-tuning a pre-trained model using the labeled samples of the new failure type and the obtained non-failure samples to create a detection model for the new failure type (104),
applying the detection model to data of products captured during the manufacturing process to identify instances of the new failure type; and
generating instructions to adjust the manufacturing process based on the identified instances of the new failure type to reduce occurrences of the failure.

21. The computer program product of claim 20, wherein the minimal number of samples is three or fewer.

22. The computer program product of claim 20 or 21, wherein computing the representations of the labeled samples comprises using a pre-trained neural network.

23. The computer program product of any of claims 20 to 22, wherein computing the similarities comprises using L2 distance or cosine similarity.

24. The computer program product of any of claims 20 to 23, wherein the method further comprises oversampling the obtained non-failure samples.

25. The computer program product of claim 24, wherein the method further comprises reducing training weights of the oversampled non-failure samples.

26. The computer program product of any of claims 20 to25, wherein the pre-trained model is trained using a meta-learning algorithm.

27. The computer program product of any of claims 20 to 26, wherein the method further comprises iteratively repeating the steps to continuously improve model performance.

28. The computer program product of any of claims 20 to 27, wherein the data consists of product images and is stored as a product image database (204).

29. The computer program product of any of claims 20 to 27, wherein the data consists of time-series data from machines used during the manufacturing process of the product
